(19) Europäisches Patentamt
European Patent Office
Office européen des brevets

(11) **EP 2 965 908 B1**

(12) **EUROPEAN PATENT SPECIFICATION**

(45) Date of publication and mention of the grant of the patent:
**21.03.2018 Bulletin 2018/12**

(21) Application number: **14176334.2**

(22) Date of filing: **09.07.2014**

(51) Int Cl.:
*B32B 27/32* (2006.01)   *C08F 210/06* (2006.01)
*C08F 2/00* (2006.01)   *C08J 5/18* (2006.01)
*C08L 23/14* (2006.01)   *B32B 27/08* (2006.01)
*B32B 27/18* (2006.01)

(54) **Propylene random copolymer for film applications**

Propylen-Zufallscopolymer für Folienanwendungen

Copolymère aléatoire de propylène pour des applications de films

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.01.2016 Bulletin 2016/02**

(73) Proprietor: **Borealis AG**
**1220 Vienna (AT)**

(72) Inventors:
• **Wang, Jingbo**
**4209 Engerwitzdorf (AT)**
• **Gahleitner, Markus**
**4501 Neuhofen/Krems (AT)**

• **Aarnio-Winterhof, Minna**
**4203 Altenberg (AT)**
• **Horill, Thomas**
**2201 Gerasdorf (AT)**
• **Wachholder, Max**
**4310 Mauthausen (AT)**

(74) Representative: **Zumstein, Angela**
**Maiwald Patentanwalts GmbH**
**Elisenhof**
**Elisenstrasse 3**
**80335 München (DE)**

(56) References cited:
EP-A1- 1 162 213        EP-A1- 2 610 274
WO-A1-2012/093098    WO-A1-2014/187686
US-B1- 6 511 755

EP 2 965 908 B1

**Description**

The present invention relates to a new propylene random copolymer as well as to films and film layers of multi-layer film constructions comprising said copolymer.
Furthermore, the present invention relates to a process for producing said new propylene random copolymer.

Propylene random copolymers are very well known and frequently used in the field of film making, especially when a good combination of transparency and mechanical performance is desired. Such a combination is especially difficult to achieve if the material should be suitable for sealing layers of multi-layer films which require a good balance between sealing initiation temperature (SIT) and hot tack force. A combination of lower SIT and higher hot tack force allows the converter to run the lines during the packaging step at higher speeds, but the overall performance of the film construction will only be satisfactory if the sealing layer is sufficiently flexible, tough and transparent. At the same time the material should have a sufficient thermal stability, like a melting temperature significantly higher than the usual steam sterilization temperature of 125°C.

In EP 2487203 A1, a propylene copolymer composition suitable for sealing layers of films is described. Said propylene copolymer composition has an overall comonomer content in the range of equal or more than 3.5 to equal or below 7.0 wt.-%, the comonomers being C5 to C12 α-olefins, combining a melting temperature of at least 130°C with an SIT of not more than 115°C, having however an insufficiently high haze, meaning a low transparency.

The same problem exists for EP 663422 A1 which defines a heterophasic propylene copolymer system, which is mixed with a linear low density polyethylene. Accordingly this composition requires a complex mixture to achieve the demands in the technical field of films while still having an insufficiently high haze and a low transparency.

EP 2610274 relates to propylene random copolymers with low randomness and being free from catalyst originating phthalates.

Accordingly the object of the present invention is to provide a polymer which is suitable for flexible and transparent films, and especially for the formation of sealing layers of flexible multi-layer film constructions. The processing technologies envisaged for such flexible films or multi-layer film constructions are cast film or blown film technology, like the air cooled or water cooled blown film technology.

The finding of the present invention is to produce a propylene random copolymer with rather high ethylene content having a moderate to low randomness, a low melting temperature and being monophasic, i.e. having a single glass transition temperature.

Accordingly, in the first aspect the present invention is directed to a propylene random copolymer (R-PP) with ethylene wherein

(a) said propylene copolymer (R-PP) has an ethylene content in the range of 5.3 to 9.0 wt.-%, a melting temperature Tm as determined by DSC according to ISO 11357 in the range of 128 to 138°C, and a xylene cold soluble fraction (XCS) in the range of 9.0 to 18.0 wt.-%;

(b) said propylene copolymer (R-PP) has a melt flow rate MFR2 (230 °C) measured according to ISO 1133 in the range of 0.8 to 25.0 g/10min;

(c) said propylene copolymer (R-PP) comprises two fractions, a first propylene copolymer fraction (R-PP1) and a second propylene copolymer fraction (R-PP2) and said first propylene copolymer fraction (R-PP1) differs from said second propylene copolymer fraction (R-PP2) in the ethylene content;

(d) the first propylene copolymer fraction (R-PP1) has an ethylene content in the range of 4.5 to 7.0 wt.-% based on the first propylene copolymer fraction (R-PP1); and

(e) a relative content of isolated to block ethylene sequences (I(E)) in the range of 45.0 to 69.0 %, wherein the I(E) content is defined by equation (I)

$$I(E) = \frac{fPEP}{(fEEE + fPEE + fPEP)} \times 100 \quad (I)$$

wherein

I(E) is the relative content of isolated to block ethylene sequences [in %];

fPEP is the mol fraction of propylene/ethylene/propylene sequences (PEP) in the sample;

fPEE is the mol fraction of propylene/ethylene/ethylene sequences (PEE) and of ethylene/ethylene/propylene sequences (EEP) in the sample;

fEEE is the mol fraction of ethylene/ethylene/ethylene sequences (EEE) in the sample

wherein all sequence concentrations being based on a statistical triad analysis of $^{13}$C-NMR data.

In order to achieve the desired property combination, it is appreciated that the propylene copolymer (R-PP) preferably has ethylene content in a very specific range which contributes to the melting temperature, and the good optical properties. Thus for the present invention, it is required that the comonomer content of the propylene copolymer (R-PP) is in the range of 5.3 to 8.5 wt.-%, preferably in the range of.5.5 to 8.2 wt.-%.

In order to be suitable for film processing, the propylene copolymer (R-PP) according to this invention has a melt flow rate $MFR_2$ (230 °C) measured according to ISO 1133 in the range of 0.8 to 25.0 g/10min, more preferably in the range of 1.0 to 20.0 g/10min, like in the range of 1.2 to 16.0 g/10min. In case the propylene copolymer (R-PP) shall be used in the cast film process the melt flow rate $MFR_2$ (230 °C) is preferably in the range of 6.0 to 16.0 g/10min, more preferably in the range of 7.0 to 11.0 g/10min. In turn, in case the propylene copolymer (R-PP) shall be used in the blown film process, like in the air cooled blown film process, the melt flow rate $MFR_2$ (230 °C) is preferably in the range of 1.0 to 4.0 g/10min, more preferably in the range of 1.5 to 3.5 g/10min.

Further the propylene copolymer of the present invention is featured by its relative content of isolated to block ethylene sequences (I(E)). The I(E) content [%] is defined by equation (I)

$$I(E) = \frac{fPEP}{(fEEE + fPEE + fPEP)} \times 100 \text{ (I)}$$

wherein

I(E) is the relative content of isolated to block ethylene sequences [in %];

fPEP is the mol fraction of propylene/ethylene/propylene sequences (PEP) in the sample;

fPEE is the mol fraction of propylene/ethylene/ethylene sequences (PEE) and of ethylene/ethylene/propylene sequences (EEP) in the sample;

fEEE is the mol fraction of ethylene/ethylene/ethylene sequences (EEE) in the sample

wherein all sequence concentrations being based on a statistical triad analysis of $^{13}$C-NMR data.

Accordingly the propylene copolymer (R-PP) has a I(E) content in the range 45.0 to 69.0 %, preferably in the range of 50.0 to 68.0 %, more preferably in the range of 52.0 to 67.0 %.

For combining sealability and resistance to steam sterilization, the propylene random copolymer (R-PP) according to the present invention has a melting temperature $T_m$ as determined by DSC (differential scanning calorimetry) according to ISO 11357 in the range of 128 to 138 °C, preferably in the range of 130 to 137 °C, like in the range of 131 to 136 °C.

Preferably the propylene copolymer (R-PP) according to the present invention is monophasic. Accordingly it is preferred that the propylene copolymer (R-PP) does not contain elastomeric (co)polymers forming inclusions as a second phase for improving mechanical properties. A polymer containing elastomeric (co)polymers as insertions of a second phase would by contrast be called heterophasic and is preferably not part of the present invention. The presence of second phases or the so called inclusions are for instance visible by high resolution microscopy, like electron microscopy or atomic force microscopy, or by dynamic mechanical thermal analysis (DMTA). Specifically in DMTA the presence of a multiphase structure can be identified by the presence of at least two distinct glass transition temperatures. According to the present invention, it does not show a phase separation on the micrometer ($\mu$m) size range. Said propylene copolymer (R-PP) preferably has a glass transition temperature in the range of -15 to - 2 °C and/or no glass transition temperature below -20 °C, said glass transition temperature(s) being determined by DMA (dynamic-mechanical analysis) according to ISO 6721-7. More preferably the copolymer (R-PP) has a glass transition temperature in the range of -13 to -2 °C, like in the range of -12 to -4°C. According to a specific embodiment the copolymer (R-PP) has only one discernible glass transition temperature.

In order to facilitate processing, especially film processing, it is also desirable that the propylene random copolymer (R-PP) according to the present invention has a suitable crystallization temperature even in absence of any nucleating agents. Preferably, the copolymer (R-PP) has a crystallization temperature $T_c$ as determined by DSC (differential scanning calorimetry) according to ISO 11357 in the range of 82 to 105°C, more preferably in the range of 85 to 103°C, like in the range of 87 to 101°C. According to a specific embodiment the copolymer (R-PP) can be modified by the addition of nucleating agents promoting the formation of the α- and/or the γ-modification of isotactic polypropylene to further improve transparency and/or thermal resistance. In case such nucleating agents are present in the final composition, the crystallization temperature $T_c$ as determined by DSC (differential scanning calorimetry) according to ISO 11357 will be in the range of 90 to 122°C, preferably in the range of 92 to 120°C.

In order to be suitable for food or pharmaceutical packaging applications it is furthermore desirable that the propylene random copolymer (R-PP) according to the present invention has a limited amount of soluble and/or extractable substances. The copolymer (R-PP) has a xylene cold soluble fraction (XCS) in the range of 9.0 to 18.0 wt.-%, preferably in the range of 9.5 to 17.0 wt.-%. Moreover, the copolymer (R-PP) preferably has a hexane extractable content determined according to FDA method on cast films of 100 μm of not more than 5.0 wt.-%, more preferably of not more than 4.5 wt.-%, like of not more than 4.0 wt.-%.

The propylene copolymer (R-PP) comprises at least two polymer fractions, like two or three polymer fractions, all of them being propylene copolymers. The random propylene copolymer (R-PP) comprises at least two different propylene copolymer fractions, like two different propylene copolymer fractions, wherein further the two propylene copolymer fractions differ in the ethylene content. Accordingly, the propylene copolymer (R-PP) preferably comprises 20 to 80 wt%, more preferably 35 to 65 wt%, like 40 to 60 wt%, of said first propylene copolymer fraction (R-PP1) and 20 to 80 wt%, more preferably 35 to 65 wt%, like 40 to 60 wt%, of said second propylene copolymer fraction (R-PP2).

Further, in an embodiment of the present invention, the first random propylene copolymer fraction (R-PP1) has a weight percentage of 20 to 80 wt% based on the propylene copolymer (R-PP) and has an ethylene content in the range of 4.5 to 7.0 wt.-% based on the first propylene copolymer fraction (R-PP1), preferably in the range of 4.8 to 6.5wt.-%, more preferably in the range of 5.0 to 6.0 wt%.

According to a further embodiment of the present invention, the second random propylene copolymer fraction (R-PP2) comprises 20 to 80 wt% based on the propylene copolymer (R-PP) and has a comonomer content in the range of 7.5 to 10.5 wt-%, still more preferably in the range of 7.7 to 10.3 wt-%.

Preferably the first random propylene copolymer fraction (R-PP1) has a lower melt flow rate $MFR_2$ (230 °C, load 2.16 kg) measured according to ISO 1133 than the second random propylene copolymer fraction (R-PP2).

In order to be especially suitable for food or pharmaceutical packaging applications it is furthermore desirable that the propylene random copolymer (R-PP) according to the present invention is free of phthalic acid esters as well as their respective decomposition products. Such substances, possibly derived from the internal donor used in the Ziegler-Natta catalyst system applied for production of the random copolymer (R-PP) include esters like bis(2-ethylhexyl)phthalate, mono(2-ethylhexyl)phthalate, di-isobutyl-phthalate and isobutyl-phthalate which are undesired components for sensitive packaging applications.

Preferably the propylene copolymer (R-PP) has a molecular weight distribution (Mw/Mn) of at least 2.0, more preferably in the range of 2.5 to 6.5, still more preferably in the range of 2.8 to 5.5.

Additionally or alternatively to the molecular weight distribution (Mw/Mn) as defined in the previous paragraph the propylene copolymer (R-PP) has preferably weight average molecular weight Mw in the range of 120 to 700 kg/mol, more preferably in the range of 150 to 600 kg/mol, like in the range of 180 to 500 kg/mol.

Preferably the propylene copolymer according to this invention has been produced in the presence of a Ziegler-Natta catalyst. The catalyst influences in particular the microstructure of the polymer. In particular, polypropylenes prepared by using a metallocene catalyst provide a different microstructure compared to polypropylenes prepared by using Ziegler-Natta (ZN) catalysts. The most significant difference is the presence of regio-defects in metallocene-made polypropylenes which is not the case for polypropylenes made by Ziegler-Natta (ZN). The regio-defects can be of three different types, namely 2,1-erythro (2,1e), 2,1-threo (2,1t) and 3,1 defects. A detailed description of the structure and mechanism of formation of regio-defects in polypropylene can be found in Chemical Reviews 2000,100(4), pages 1316-1327.

The term "2,1 regio defects" as used in the present invention defines the sum of 2,1 erythro regio-defects and 2,1 threo regio-defects.

Accordingly it is preferred that the propylene copolymer (R-PP) according to this invention has 2,1 regio-defects, like 2,1 erythro regio-defects, of at most 0.4 %, more preferably of at most 0.3 %, still more preferably of at most 0.2 %, determined by $^{13}$C-NMR spectroscopy. In one specific embodiment no 2,1 regio-defects, like 2,1 erythro regio-defects, are detectable for the propylene copolymer (R-PP).

The propylene copolymer (R-PP) as defined in the instant invention may contain up to 5.0 wt.-% additives, like α-nucleating agents and antioxidants, as well as slip agents and antiblocking agents. Preferably the additive content (without α-nucleating agents) is below 3.0 wt.-%, like below 1.0 wt.-%.

Preferably the propylene copolymer (R-PP) comprises an α-nucleating agent. Even more preferred the present invention is free of β-nucleating agents. The α-nucleating agent is preferably selected from the group consisting of

> (i) salts of monocarboxylic acids and polycarboxylic acids, e.g. sodium benzoate or aluminum tert-butylbenzoate, and
> (ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
> (iii) salts of diesters of phosphoric acid, e.g. sodium 2,2'-methylenebis (4, 6,-di-tert-butylphenyl) phosphate or aluminium-hydroxy-bis[2,2'-methylenebis(4,6-di-t-butylphenyl)phosphate], and
> (iv) vinylcycloalkane polymer and vinylalkane polymer, and
> (v) mixtures thereof.

Such additives are generally commercially available and are described, for example, in "Plastic Additives Handbook", 5th edition, 2001 of Hans Zweifel.

Preferably the propylene copolymer (R-PP) contains up to 2.0 wt.-% of the α-nucleating agent. In a preferred embodiment, the propylene copolymer (R-PP) contains not more than 3000 ppm, more preferably of 1 to 3000 ppm, more preferably of 5 to 2000 ppm of an α-nucleating agent, in particular selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, vinylcycloalkane polymer, vinylalkane polymer, and mixtures thereof.

In another embodiment of the present invention, propylene copolymer (R-PP) has been visbroken with a visbreaking ratio [final MFR2 (230°C/2.16 kg) / initial MFR2 (230°C/2.16 kg)] of 2 to 50, wherein "final MFR2 (230°C/2.16 kg)" is the MFR2 (230°C/2.16 kg) of the propylene copolymer (R-PP) after visbreaking and "initial MFR2 (230°C/2.16 kg)" is the MFR2 (230°C/2.16 kg) of the propylene copolymer (R-PP) before visbreaking.

Preferred mixing devices suitable for visbreaking are discontinuous and continuous kneaders, twin screw extruders and single screw extruders with special mixing sections and co-kneaders.

By visbreaking the propylene copolymer (R-PP) with heat or at more controlled conditions with peroxides, the molar mass distribution (MWD) becomes narrower because the long molecular chains are more easily broken up or scissored and the molar mass M, will decrease, corresponding to an MFR2 increase. The MFR2 increases with increasing the amount of peroxide which is used.

Such visbreaking may be carried out in any known manner, like by using a peroxide visbreaking agent. Typical visbreaking agents are 2,5-dimethyl-2,5-bis(tert.butyl-peroxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butylperoxide (DTBP) (for instance sold under the tradenames Trigonox B and Luperox Di), tert.butyl-cumyl-peroxide (BCUP) (for instance sold under the tradenames Trigonox T and Luperox 801) and bis (tert.butylperoxy-isopropyl)benzene (DIPP) (for instance sold under the tradenames Perkadox 14S and Luperox DC). Suitable amounts of peroxide to be employed in accordance with the present invention are in principle known to the skilled person and can easily be calculated on the basis of the amount of the propylene copolymer (R-PP) to be subjected to visbreaking, the MFR2 (230 °C/2.16 kg) value of the propylene copolymer (R-PP) to be subjected to visbreaking and the desired target MFR2 (230 °C/2.16 kg) of the product to be obtained. Accordingly, typical amounts of peroxide visbreaking agent are from 0.005 to 0.7 wt.-%, more preferably from 0.01 to 0.4 wt.-%, based on the total amount of polymers in the propylene copolymer (R-PP) employed.

Typically, visbreaking in accordance with the present invention is carried out in an extruder, so that under the suitable conditions, an increase of melt flow rate is obtained. During visbreaking, higher molar mass chains of the starting product are broken statistically more frequently than lower molar mass molecules, resulting as indicated above in an overall decrease of the average molecular weight and an increase in melt flow rate.

In case visbreaking is performed, the inventive propylene copolymer (R-PP) is preferably obtained by visbreaking with the use of peroxide in an extruder.

After visbreaking the propylene copolymer (R-PP) according to this invention is preferably in the form of pellets or granules. The instant propylene copolymer (R-PP) is preferably used in pellet or granule form for the preparation of film article.

Articles like films, multi-layer film constructions and packaging articles from the propylene random copolymer (R-PP) according to the present invention should combine flexibility and toughness. The copolymer (R-PP) therefore has preferably a flexural modulus as determined according to ISO 178 on injection molded specimens in the range of 300 to 600 MPa, more preferably in the range of 330 to 570 MPa, like in the range of 350 to 550 MPa. Also, the copolymer (R-PP) has preferably a Charpy notched impact strength as determined according to ISO 179 1eA at +23°C of at least 9.0 kJ/m$^2$, more preferably in the range of 9.0 to 80 kJ/m$^2$, like in the range of 11.0 to 70 kJ/m$^2$.

It has surprisingly been found that such propylene copolymer (R-PP) according to the present invention provides the film material made thereof with a combination of low sealing initiation temperature (S.I.T) and surprisingly high hot tack force. Furthermore, the film made from the propylene copolymer (R-PP) shows good optical properties even after subjecting it to a heat sterilization step.

The present invention is not only directed to the instant propylene copolymer (R-PP) but also to unoriented films and film layers of multi-layer film constructions comprising the inventive propylene random copolymer (R-PP). Accordingly in a further embodiment the present invention is directed to unoriented films, like cast films or blown films, e.g. air cooled blown films, comprising at least 90 wt.%, preferably comprising at least 95 wt.-%, yet more preferably comprising at least 99 wt.-%, of the instant propylene copolymer (R-PP).

In order to be suitable for flexible packaging systems, such an unoriented film comprising the inventive propylene random copolymer (R-PP) shall preferably have a tensile modulus determined according to ISO 527-3 at 23°C on cast films with a thickness of 50 $\mu$m in machine direction in the range of 200 to 400 MPa, more preferably in the range of 220 to 380 MPa, like in the range of 240 to 360 MPa. Again in order to ensure visibility of the content of such a flexible packaging system, such an unoriented film shall preferably have a haze determined according to ASTM D1003-00 on cast films with a thickness of 50 $\mu$m of not more than 2.0%, more preferably of not more than 1.8%, like of not more than 1.6%.

Further, the invention is also directed to a multi-layer film construction, comprising an unoriented film as defined above as an outermost layer.

For being able to serve as a sealing layer in a multi-layer film construction, such an unoriented film comprising the inventive propylene random copolymer (R-PP) shall preferably have a sealing initiation temperature (SIT) in the range of 90 to 115°C, more preferably in the range of 93 to less than 112°C, like in the range of 95 to less than 111°C. According to a specific embodiment the low SIT of such an unoriented film is combined with a high hot tack force. An unoriented film comprising the inventive propylene random copolymer (R-PP) shall preferably have a hot tack force of at least 1:0 N in combination with a hot tack temperature in the range of 100 to 130°C, more preferably of at least 1.3 N in combination with a hot tack temperature in the range of 105 to 125°C, like of at least 1.5 N in combination with a hot tack temperature in the range of 107 to 120°C.

A multi-layer film construction comprising at least one layer comprising the inventive propylene random copolymer (R-PP) is preferably produced by multi-layer co-extrusion followed by film casting or film blowing. In this case, at least one of the outermost layers of said multi-layer film construction serving as sealing layer(s) shall comprise the inventive propylene random copolymer (R-PP) as defined above. The inventive multi-layer film construction shall preferably have a thickness in the range of 30 to 500 $\mu$m, more preferably in the range of 50 to 400 $\mu$m, like in the range of 60 to 300 $\mu$m. The sealing layer(s) comprising the inventive propylene random copolymer (R-PP) shall preferably have a thickness in the range of 3 to 50 $\mu$m, more preferably in the range of 5 to 30 $\mu$m, like in the range of 8 to 25 $\mu$m.

Films and/or multi-layer film constructions according to the present invention shall preferably be used for flexible packaging systems, such as bags or pouches for food and pharmaceutical packaging or medical articles in general.

In case a film is produced by cast film technology the molten propylene copolymer (R-PP) is extruded through a slot extrusion die onto a chill roll to cool the polymer to a solid film. Typically the propylene copolymer (R-PP) is firstly compressed and liquefied in an extruder, it being possible for any additives to be already added to the polymer or introduced at this stage via a masterbatch. The melt is then forced through a flat-film die (slot die), and the extruded film is taken off on one or more take-off rolls, during which it cools and solidifies. It has proven particularly favorable to keep the take-off roll or rolls, by means of which the extruded film is cooled and solidified, at a temperature from 10 to 50°C, preferably from 15 to 40°C.

In the blown film process the propylene copolymer (R-PP) melt is extruded through an annular die and blown into a tubular film by forming a bubble which is collapsed between nip rollers after solidification. The blown extrusion can be preferably effected at a temperature in the range 160 to 240 °C, and cooled by water or preferably by blowing gas (generally air) at a temperature of 10 to 50 °C to provide a frost line height of 0.5 to 8 times the diameter of the die. The blow up ratio should generally be in the range of from 1.5 to 4, such as from 2 to 4, preferably 2.5 to 3.5.

The propylene copolymer (R-PP) according to this invention is preferably produced in a sequential polymerization process in the presence of a Ziegler-Natta catalyst as defined below.

Accordingly it is preferred that the propylene copolymer (R-PP) is produced in the presence of

(a) a Ziegler-Natta catalyst (ZN-C) comprising a titanium compound (TC), a magnesium compound (MC) and an internal donor(ID), wherein said internal donor (ID) is a non-phthalic acid ester,
(b) optionally a co-catalyst (Co), and
(c) optionally an external donor (ED).

Preferably the propylene copolymer (R-PP) is produced in a sequential polymerization process comprising at least two reactors (R1) and (R2), in the first reactor (R1) the first propylene copolymer fraction (R-PP1) is produced and subsequently transferred into the second reactor (R2), in the second reactor (R2) the second propylene copolymer fraction (R-PP2) is produced in the presence of the first propylene copolymer fraction (R-PP1).

The term "sequential polymerization system" indicates that the propylene copolymer (R-PP) is produced in at least two reactors connected in series. Accordingly the present polymerization system comprises at least a first polymerization reactor (R1) and a second polymerization reactor (R2), and optionally a third polymerization reactor (R3). The term "polymerization reactor" shall indicate that the main polymerization takes place. Thus in case the process consists of two polymerization reactors, this definition does not exclude the option that the overall system comprises for instance a pre-polymerization step in a pre-polymerization reactor. The term "consist of" is only a closing formulation in view of the main polymerization reactors.

Preferably at least one of the two polymerization reactors (R1) and (R2) is a gas phase reactor (GPR). Still more preferably the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

Accordingly, the first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR). Accordingly the average concentration of propylene copolymer (R-PP), i.e. the first fraction (1st F) of the propylene copolymer (R-PP) (i.e. the first propylene copolymer fraction (R-PP1)), in the polymer slurry within the loop reactor (LR) is typically from 15 wt.-% to 55 wt.-%, based on the total weight of the polymer slurry within the loop reactor (LR). In one preferred embodiment of the present invention the average concentration of the first propylene copolymer fraction (R-PP1) in the polymer slurry within the loop reactor (LR) is from 20 wt.-% to 55 wt.-% and more preferably from 25 wt.-% to 52 wt.-%, based on the total weight of the polymer slurry within the loop reactor (LR).

Preferably the propylene copolymer of the first polymerization reactor (R1), i.e. the first propylene copolymer fraction (R-PP1), more preferably the polymer slurry of the loop reactor (LR) containing the first propylene copolymer fraction (R-PP1), is directly fed into the second polymerization reactor (R2), i.e. into the (first) gas phase reactor (GPR1), without a flash step between the stages. This kind of direct feed is described in EP 887379 A, EP 887380 A, EP 887381 A and EP 991684 A. By "direct feed" is meant a process wherein the content of the first polymerization reactor (R1), i.e. of the loop reactor (LR), the polymer slurry comprising the first propylene copolymer fraction (R-PP1), is led directly to the next stage gas phase reactor.

Alternatively, the propylene copolymer of the first polymerization reactor (R1), i.e. the first propylene copolymer fraction (R-PP1), more preferably polymer slurry of the loop reactor (LR) containing the first propylene copolymer fraction (R-PP1), may be also directed into a flash step or through a further concentration step before fed into the second polymerization reactor (R2), i.e. into the gas phase reactor (GPR). Accordingly, this "indirect feed" refers to a process wherein the content of the first polymerization reactor (R1), of the loop reactor (LR), i.e. the polymer slurry, is fed into the second polymerization reactor (R2), into the (first) gas phase reactor (GPR1), via a reaction medium separation unit and the reaction medium as a gas from the separation unit.

More specifically, the second polymerization reactor (R2), and any subsequent reactor, for instance the third polymerization reactor (R3), are preferably gas phase reactors (GPRs). Such gas phase reactors (GPR) can be any mechanically mixed or fluid bed reactors. Preferably the gas phase reactors (GPRs) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first polymerization reactor (R1) is a slurry reactor (SR), like loop reactor (LR), whereas the second polymerization reactor (R2) and any optional subsequent reactor, like the third polymerization reactor (R3), are gas phase reactors (GPRs). Accordingly for the instant process at least two, preferably two polymerization reactors (R1) and (R2) or three polymerization reactors (R1), (R2) and (R3), namely a slurry reactor (SR), like loop reactor (LR) and a (first) gas phase reactor (GPR1) and optionally a second gas phase reactor (GPR2), connected in series are used. If needed prior to the slurry reactor (SR) a pre-polymerization reactor is placed.

The Ziegler-Natta catalyst (ZN-C) is fed into the first polymerization reactor (R1) and is transferred with the polymer (slurry) obtained in the first polymerization reactor (R1) into the subsequent reactors. If the process covers also a pre-polymerization step it is preferred that all of the Ziegler-Natta catalyst (ZN-C) is fed in the pre-polymerization reactor. Subsequently the pre-polymerization product containing the Ziegler-Natta catalyst (ZN-C) is transferred into the first polymerization reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182, WO 2004/000899, WO 2004/111095, WO 99/24478, WO 99/24479 or in WO 00/68315.

A further suitable slurry-gas phase process is the Spheripol® process of Basell.

Especially good results are achieved in case the temperature in the reactors is carefully chosen.

Accordingly it is preferred that the operating temperature in the first polymerization reactor (R1) is in the range of 62 to 85 °C, more preferably in the range of 65 to 82 °C, still more preferably in the range of 67 to 80 °C.

Alternatively or additionally to the previous paragraph it is preferred that the operating temperature in the second polymerization reactor (R2) and optional in the third reactor (R3) is in the range of 75 to 95 °C, more preferably in the range of 78 to 92 °C.

Preferably the operating temperature in the second polymerization reactor (R2) is equal or higher to the operating temperature in the first polymerization reactor (R1). Accordingly it is preferred that the operating temperature

(a) in the first polymerization reactor (R1) is in the range of 62 to 85 °C, more preferably in the range of 65 to 82 °C, still more preferably in the range of 67 to 80 °C, and
(b) in the second polymerization reactor (R2) is in the range of 75 to 95 °C, more preferably in the range of 78 to 92 °C, still more preferably in the range of 78 to 88 °C,

with the proviso that the operating temperature in the second polymerization reactor (R2) is equal to or higher than the operating temperature in the first polymerization reactor (R1).

Still more preferably the operating temperature of the third polymerization reactor (R3) - if present - is higher than the operating temperature in the first polymerization reactor (R1). In one specific embodiment the operating temperature of the third polymerization reactor (R3) - if present - is higher than the operating temperature in the first polymerization reactor (R1) and in the second polymerization reactor (R2). Accordingly it is preferred that the operating temperature

(a) in the first polymerization reactor (R1) is in the range of 62 to 85 °C, more preferably in the range of 65 to 82 °C, still more preferably in the range of 67 to 80 °C,
(b) in the second polymerization reactor (R2) is in the range of 75 to 95 °C, more preferably in the range of 78 to 92 °C, still more preferably in the range of 78 to 88 °C, and
(c) in the third polymerization reactor (R3) - if present - is in the range of 75 to 95 °C, more preferably in the range of 78 to 92 °C, still more preferably in the range of 85 to 92 °C, like in the range of 87 to 92 °C,

with the proviso that the operating temperature in the second polymerization reactor (R2) is equal to or higher than the operating temperature in the first polymerization reactor (R1) and

with the proviso that the temperature in the third polymerization reactor (R3) is higher than the operating temperature in the first polymerization reactor (R1), preferably is higher than the operating temperature in the first polymerization reactor (R1) and in the second polymerization reactor (R2).

Typically the pressure in the first polymerization reactor (R1), preferably in the loop reactor (LR), is in the range of from 20 to 80 bar, preferably 30 to 70 bar, like 35 to 65 bar, whereas the pressure in the second polymerization reactor (R2), i.e. in the (first) gas phase reactor (GPR1), and optionally in any subsequent reactor, like in the third polymerization reactor (R3), e.g. in the second gas phase reactor (GPR2), is in the range of from 5 to 50 bar, preferably 15 to 40 bar.

Preferably hydrogen is added in each polymerization reactor in order to control the molecular weight, i.e. the melt flow rate $MFR_2$.

Preferably the average residence time is rather long in the polymerization reactors (R1) and (R2). In general, the average residence time ($\tau$) is defined as the ratio of the reaction volume ($V_R$) to the volumetric outflow rate from the reactor ($Q_o$) (i.e. $V_R/Q_o$), i.e $\tau = V_R/Q_o$ [tau = $V_R/Q_o$]. In case of a loop reactor the reaction volume ($V_R$) equals to the reactor volume.

Accordingly the average residence time ($\tau$) in the first polymerization reactor (R1) is preferably at least 20 min, more preferably in the range of 20 to 45 min, still more preferably in the range of 25 to 42 min, like in the range of 28 to 40 min, and/or the average residence time ($\tau$) in the second polymerization reactor (R2) is preferably at least 90 min, more preferably in the range of 90 to 220 min, still more preferably in the range of 100 to 210 min, yet more preferably in the range of 105 to 200 min, like in the range of 105 to 190 min. Preferably the average residence time ($\tau$) in the third polymerization reactor (R3) - if present - is preferably at least 30 min, more preferably in the range of 30 to 90 min, still more preferably in the range of 40 to 80 min, like in the range of 50 to 80 min.

Further it is preferred that the average residence time ($\tau$) in the total sequential polymerization system, more preferably that the average residence time ($\tau$) in the first (R1), second (R2) and optional third polymerization reactors (R3) together, is at least 140 min, more preferably at least 150 min, still more preferably in the range of 140 to 240 min, more preferably in the range of 150 to 220 min, still more preferably in the range of 155 to 220 min.

As mentioned above the instant process can comprises in addition to the (main) polymerization of the propylene copolymer (R-PP) in the at least two polymerization reactors (R1, R2 and optional R3) prior thereto a pre-polymerization in a pre-polymerization reactor (PR) upstream to the first polymerization reactor (R1).

In the pre-polymerization reactor (PR) a polypropylene (Pre-PP) is produced. The pre-polymerization is conducted in the presence of the Ziegler-Natta catalyst (ZN-C). According to this embodiment the Ziegler-Natta catalyst (ZN-C), the co-catalyst (Co), and the external donor (ED) are all introduced to the pre-polymerization step. However, this shall not exclude the option that at a later stage for instance further co-catalyst (Co) and/or external donor (ED) is added in the polymerization process, for instance in the first reactor (R1). In one embodiment the Ziegler-Natta catalyst (ZN-C), the co-catalyst (Co), and the external donor (ED) are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture (MI) of the Ziegler-Natta catalyst (ZN-C) and the polypropylene (Pre-PP) produced in the pre-polymerization reactor (PR) is obtained. Preferably the Ziegler-Natta catalyst (ZN-C) is (finely) dispersed in the polypropylene (Pre-PP). In other words, the Ziegler-Natta catalyst (ZN-C) particles introduced in the pre-polymerization reactor (PR) split into smaller fragments which are evenly distributed within the growing polypropylene (Pre-PP). The sizes of the introduced Ziegler-Natta catalyst (ZN-C) particles as well as of the obtained fragments are not of essential relevance for the instant invention and within the skilled knowledge.

As mentioned above, if a pre-polymerization is used, subsequent to said pre-polymerization, the mixture (MI) of the Ziegler-Natta catalyst (ZN-C) and the polypropylene (Pre-PP) produced in the pre-polymerization reactor (PR) is transferred to the first reactor (R1). Typically the total amount of the polypropylene (Pre-PP) in the final propylene copolymer (R-PP) is rather low and typically not more than 5.0 wt.-%, more preferably not more than 4.0 wt.-%, still more preferably in the range of 0.5 to 4.0 wt.-%, like in the range 1.0 of to 3.0 wt.-%.

In case that pre-polymerization is not used propylene and the other ingredients such as the Ziegler-Natta catalyst (ZN-C) are directly introduced into the first polymerization reactor (R1).

Accordingly the process according the instant invention comprises the following steps under the conditions set out above

(a) in the first polymerization reactor (R1), i.e. in a loop reactor (LR), propylene and ethylene are polymerized obtaining a first propylene copolymer fraction (R-PP1) of the propylene copolymer (R-PP),
(b) transferring said first propylene copolymer fraction (R-PP1) to a second polymerization reactor (R2),
(c) in the second polymerization reactor (R2) propylene and ethylene are polymerized in the presence of the first propylene copolymer fraction (R-PP1) obtaining a second propylene copolymer fraction (R-PP2) of the propylene copolymer (R-PP), said first propylene copolymer fraction (R-PP1) and said second propylene copolymer fraction (R-PP2) form the propylene copolymer (R-PP).

A pre-polymerization as described above can be accomplished prior to step (a).

The Ziegler-Natta Catalyst (ZN-C), the external donor (ED) and the co-catalyst (Co)

As pointed out above in the specific process for the preparation of the propylene copolymer (R-PP) as defined above a Ziegler-Natta catalyst (ZN-C) must be used. Accordingly the Ziegler-Natta catalyst (ZN-C) will be now described in more detail.

The catalyst used in the present invention is a solid Ziegler-Natta catalyst (ZN-C), which comprises a titanium compound (TC), a magnesium compound (MC) and an internal donor (ID), wherein said internal donor (ID) is a non-phthalic acid ester, most preferably diester of non-phthalic dicarboxylic acids as described in more detail below.

Thus, the catalyst used in the present invention is fully free of undesired phthalic compounds.

The Ziegler-Natta catalyst (ZN-C) can be further defined by the way as obtained. Accordingly the Ziegler-Natta catalyst (ZN-C) is preferably obtained by a process comprising the steps of

(a) providing a solution of at least one complex (A) being a complex of a magnesium compound (MC) and an alcohol comprising in addition to the hydroxyl moiety at least one further oxygen bearing moiety (A1) being different to a hydroxyl group, and optionally at least one complex (B) being a complex of said magnesium compound (MC) and an alcohol not comprising any other oxygen bearing moiety (B1),

(b) combining said solution with a titanium compound (TC) and producing an emulsion the dispersed phase of which contains more than 50 mol.-% of the magnesium;

(c) agitating the emulsion in order to maintain the droplets of said dispersed phase preferably within an average size range of 5 to 200μm;

(d) solidifying said droplets of the dispersed phase;

(e) recovering the solidified particles of the olefin polymerisation catalyst component,

and wherein an internal donor (ID) is added at any step prior to step c) and said internal donor (ID) is non-phthalic acid ester, preferably said internal donor (ID) is a diester of non-phthalic dicarboxylic acids as described in more detail below.

Detailed description as to how such a Ziegler-Natta catalyst (ZN-C) can be obtained is disclosed in WO 2012/007430.

In a preferred embodiment in step a) the solution of complex of magnesium compound (MC) is a mixture of complexes of magnesium compound (MC) (complexes (A) and (B)).

The complexes of magnesium compound (MC) (complexes (A) and (B)) can be prepared *in situ in* the first step of the catalyst preparation process by reacting said magnesium compound (MC) with the alcohol(s) as described above and in more detail below, or said complexes can be separately prepared complexes, or they can be even commercially available as ready complexes and used as such in the catalyst preparation process of the invention. In case the mixture of complexes of magnesium compound (MC) (complexes (A) and (B)) are prepared *in situ* in the first step of the catalyst preparation process they are preferably prepared by reacting said magnesium compound (MC) with the mixture of alcohols (A1) and (B1).

Preferably, the alcohol (A1) comprising in addition to the hydroxyl moiety at least one further oxygen bearing group different to a hydroxyl group to be employed in accordance with the present invention is an alcohol bearing an ether group.

Illustrative examples of such preferred alcohols (A1) comprising in addition to the hydroxyl moiety at least one further oxygen bearing group to be employed in accordance with the present invention are glycol monoethers, in particular $C_2$ to $C_4$ glycol monoethers, such as ethylene or propylene glycol monoethers wherein the ether moieties comprise from 2 to 18 carbon atoms, preferably from 4 to 12 carbon atoms. Preferred monoethers are $C_2$ to $C_4$ glycol monoethers and derivatives thereof. Illustrative and preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

In case a mixture of complexes (A) and (B) (or alcohols (A1) and (B1) respectively) are used, the different complexes or alcohols are usually employed in a mole ratio of A:B, or A1:B1 from 1.0:10 to 1.0:0.5, preferably this mole ratio is from 1.0:8.0 to 1.0:1.0, more preferably 1.0:6.0 to 1.0:2.0, even more preferably 1.0:5.0 to 1.0:3.0. As indicated in the ratios above it is more preferred that the amount of alcohol A1, preferably alcohol with ether moiety, is lower than the amount of alcohol B1, i.e. alcohol without any other oxygen bearing moiety different to hydroxyl. Accordingly, the different complexes or alcohols are preferably employed in a mole ratio of A:B, or A1:B1 from 2:1 to 8:1, more preferably 3:1 to 5:1.

The internal donor (ID) used in the preparation of the Ziegler-Natta catalyst (ZN-C) is preferably selected from (di)esters of non-phthalic carboxylic (di)acids and derivatives and mixtures thereof. The ester moieties, i.e. the moieties derived from an alcohol (i.e. the alkoxy group of the ester), may be identical or different, preferably these ester moieties are identical. Typically the ester moieties are aliphatic or aromatic hydrocarbon groups. Preferred examples thereof are linear or branched aliphatic groups having from 1 to 20 carbon atoms, preferably 2 to 16 carbon atoms, more preferably from 2 to 12 carbon atoms, or aromatic groups having 6 to 12 carbon atoms, optionally containing heteroatoms of Groups 14 to 17 of the Periodic Table of IUPAC, especially N, O, S and/or P. The acid moiety of the di- or monoacid(di)ester, preferably of the diester of diacid, preferably comprises 1 to 30 carbon atoms, more preferably, 2 to 20 carbon atoms, still more preferably 2 to 16 carbon atoms, optionally being substituted by aromatic or saturated or non-saturated cyclic or aliphatic hydrocarbyls having 1 to 20 C, preferably 1 to 10 carbon atoms and optionally containing heteroatoms of Groups 14 to 17 of the Periodic Table of IUPAC, especially N, O, S and/or P. Especially preferred esters are diesters of mono-unsaturated dicarboxylic acids.

In particular preferred esters are esters belonging to a group comprising malonates, maleates, succinates, glutarates, cyclohexene-1,2-dicarboxylates and benzoates, each of the aforementioned optionally being substituted as defined below, and any derivatives and/or mixtures thereof. Preferred examples are e.g. substituted maleates and citraconates, most preferably citraconates.

The internal donor (ID) or precursor thereof as defined further below is added preferably in step a) to said solution.

Esters used as internal donors (ID) can be prepared as is well known in the art. As example dicarboxylic acid diesters can be formed by simply reacting of a carboxylic diacid anhydride with a $C_1$-$C_{20}$ alkanol and/or diol.

The titanium compound (TC) is preferably a titanium halide, like $TiCl_4$.

The complexes of magnesium compounds can be alkoxy magnesium complexes, preferably selected from the group consisting of magnesium dialkoxides, and complexes of a magnesium dihalide and a magnesium dialkoxide. It may be a reaction product of an alcohol and a magnesium compound selected from the group consisting of dialkyl magnesiums, alkyl magnesium alkoxides and alkyl magnesium halides, preferably dialkyl magnesium. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide may be the reaction product of a dialkyl magnesium of the formula $R_2Mg$, wherein each one of the two Rs is a similar or different $C_1$-$C_{20}$ alkyl, preferably a similar or different $C_2$-$C_{10}$ alkyl with alcohols as defined in the present application. Typical magnesium alkyls are ethylbutyl magnesium, dibutyl magnesium, dipropyl magnesium, propylbutyl magnesium, dipentyl magnesium, butylpentyl magnesium, butyloctyl magnesium and dioctyl magnesium. Most preferably, one R of the formula $R_2Mg$ is a butyl group and the other R is an octyl or ethyl group, i.e. the dialkyl magnesium compound is butyl octyl magnesium or butyl ethyl magnesium.

Typical alkyl-alkoxy magnesium compounds RMgOR, when used, are ethyl magnesium butoxide, butyl magnesium pentoxide, octyl magnesium butoxide and octyl magnesium octoxide.

Dialkyl magnesium or alkyl magnesium alkoxide can react, in addition to the alcohol (A1) containing in addition to the hydroxyl group at least one further oxygen bearing moiety being different to a hydroxyl moiety, which is defined above in this application, with an alcohol not comprising any other oxygen bearing moiety (B1), which can be a monohydric alcohol R'OH, or a mixture thereof with a polyhydric alcohol $R'(OH)_m$.

Preferred monohydric alcohols are alcohols of the formula $R^b(OH)$, wherein $R^b$ is a $C_1$-$C_{20}$, preferably a $C_4$-$C_{12}$, and most preferably a $C_6$-$C_{10}$, straight-chain or branched alkyl residue or a $C_6$-$C_{12}$ aryl residue. Preferred monohydric alcohols include methanol, ethanol, n-propanol, iso-propanol, n-butanol, iso-butanol, sec-butanol, tert-butanol, n-amyl alcohol, iso-amyl alcohol, sec-amyl alcohol, tert-amyl alcohol, diethyl carbinol, sec-isoamyl alcohol, tert-butyl carbinol, 1-hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol, 1-undecanol, 1-dodecanol, 1-tridecanol, 1-tetradecanol, 1-pentadecanol, 1-hexadecanol, 1-heptadecanol 1-octadecanol and phenol or benzyl alcohol. The aliphatic monohydric alcohols may optionally be unsaturated, as long as they do not act as catalyst poisons. The most preferred monohydric alcohol is 2-ethyl-1-hexanol.

Preferred polyhydric alcohols are alcohols of the formula $R^a(OH)_m$, wherein $R^a$ is a straight-chain, cyclic or branched $C_2$ to $C_6$ hydrocarbon residue, (OH) denotes hydroxyl moieties of the hydrocarbon residue and m is an integer of 2 to 6, preferably 3 to 5. Especially preferred polyhydric alcohols include ethylene glycol, propylene glycol, trimethylene glycol, 1,2-butylene glycol, 1,3-butylene glycol, 1,4-butylene glycol, 2,3-butylene glycol, 1,5pentanediol, 1,6-hexanediol, 1,8-octanediol, pinacol, diethylene glycol, triethylene glycol, 1,2-catechol, 1,3-catechol and 1,4-catechol, and triols such as glycerol and pentaerythritol.

The solvents to be employed for the preparation of the Ziegler-Natta catalyst (ZN-C) may be selected among aromatic and aliphatic solvents or mixtures thereof. Preferably the solvents are aromatic and/or aliphatic hydrocarbons with 5 to 20 carbon atoms, preferably 5 to 16, more preferably 5 to 12 carbon atoms, examples of which include benzene, toluene, cumene, xylol and the like, with toluene being preferred, as well as pentane, hexane, heptane, octane and nonane including straight chain, branched and cyclic compounds, and the like, with hexanes and heptanes being particular preferred.

Mg compound (MC) is typically provided as a 10 to 50 wt-% solution in a solvent as indicated above. Typical commercially available MC solutions are 20 - 40 wt-% solutions in toluene or heptanes.

The reaction for the preparation of the complex of magnesium compound (MC) may be carried out at a temperature of 40° to 70°C.

In step b) the solution of step a) is typically added to the titanium compound (TC), such as titanium tetrachloride. This addition preferably is carried out at a low temperature, such as from -10 to 40°C, preferably from -5 to 20°C, such as about -5°C to 15 °C.

The temperature for steps b) and c), is typically -10 to 50°C, preferably from -5 to 30°C, while solidification typically requires heating as described in detail further below.

The emulsion, i.e. the two phase liquid-liquid system may be formed in all embodiments of the present invention by simple stirring and optionally adding (further) solvent(s) and additives, such as the turbulence minimizing agent (TMA) and/or the emulsifying agents described further below.

Preparation of the Ziegler-Natta catalyst (ZN-C) used in the present invention is based on a liquid/liquid two-phase system where no separate external carrier materials such as silica or $MgCl_2$ are needed in order to get solid catalyst particles.

The present Ziegler-Natta catalyst (ZN-C) particles are spherical and they have preferably a mean particle size from 5 to 500 $\mu$m, such as from 5 to 300 $\mu$m and in embodiments from 5 to 200 $\mu$m, or even from 10 to 100 $\mu$m. These ranges also apply for the droplets of the dispersed phase of the emulsion as described herein, taking into consideration that the droplet size can change (decrease) during the solidification step.

The process of the preparation of the Ziegler-Natta catalyst (ZN-C) as intermediate stage, yields to an emulsion of a denser, titanium compound (TC)/toluene-insoluble, oil dispersed phase typically having a titanium compound (TC)/magnesium mol ratio of 0.1 to 10 and an oil disperse phase having a titanium compound (TC)/magnesium mol ratio of 10 to 100. The titanium compound (TC) is preferably TiCl$_4$. This emulsion is then typically agitated, optionally in the presence of an emulsion stabilizer and/or a turbulence minimizing agent, in order to maintain the droplets of said dispersed phase, typically within an average size range of 5 to 200 $\mu$m. The catalyst particles are obtained after solidifying said particles of the dispersed phase e.g. by heating.

In effect, therefore, virtually the entirety of the reaction product of the Mg complex with the titanium compound (TC) - which is the precursor of the ultimate catalyst component - becomes the dispersed phase, and proceeds through the further processing steps to the final particulate form. The disperse phase, still containing a useful quantity of titanium compound (TC), can be reprocessed for recovery of that metal.

Furthermore, emulsifying agents/emulsion stabilizers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particular preferred are unbranched C$_{12}$ to C$_{20}$ (meth)acrylates such as poly(hexadecyl)-methacrylate and poly(octadecyl)-methacrylate.

Furthermore, in some embodiments a turbulence minimizing agent (TMA) can be added to the reaction mixture in order to improve the emulsion formation and maintain the emulsion structure. Said TMA agent has to be inert and soluble in the reaction mixture under the reaction conditions, which means that polymers without polar groups are preferred, like polymers having linear or branched aliphatic carbon backbone chains. Said TMA is in particular preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

TMA can be added to the emulsion in an amount of e.g. 1 to 1000 ppm, preferably 5 to 100 ppm and more preferable 5 to 50 ppm, based on the total weight of the reaction mixture.

It has been found that the best results are obtained when the titanium compound (TC)/Mg mol ratio of the dispersed phase (denser oil) is 1 to 5, preferably 2 to 4, and that of the disperse phase oil is 55 to 65. Generally the ratio of the mol ratio titanium compound (TC)/Mg in the disperse phase oil to that in the denser oil is at least 10.

Solidification of the dispersed phase droplets by heating is suitably carried out at a temperature of 70 to 150°C, usually at 80 to 110°C, preferably at 90 to 110°C. The heating may be done faster or slower. As especial slow heating is understood here heating with a heating rate of about 5°C/min or less, and especial fast heating e.g. 10°C/min or more. Often slower heating rates are preferable for obtaining good morphology of the catalyst component.

The solidified particulate product may be washed at least once, preferably at least twice, most preferably at least three times with a hydrocarbon, which preferably is selected from aromatic and aliphatic hydrocarbons, preferably with toluene, heptane or pentane. Washings can be done with hot (e.g. 90°C) or cold (room temperature) hydrocarbons or combinations thereof.

Finally, the washed Ziegler-Natta catalyst (ZN-C) is recovered. It can further be dried, as by evaporation or flushing with nitrogen, or it can be slurried into an oily liquid without any drying step.

The finally obtained Ziegler-Natta catalyst (ZN-C) is desirably in the form of particles having generally an average size range of 5 to 200 $\mu$m, preferably 10 to 100, even an average size range of 20 to 60 $\mu$m is possible.

The Ziegler-Natta catalyst (ZN-C) is preferably used in association with an alkyl aluminum cocatalyst and optionally external donors.

As further component in the instant polymerization process an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a{}_pR^b{}_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different and represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso=butyl, iso-pentyl, tert.-butyl, tert.-amyl, neopentyl, cyclopentyl, cyclohexyl, methylcyclopentyl and cycloheptyl.

More preferably both $R^3$ and $R^4$ are the same, yet more preferably both $R^3$ and $R^4$ are an ethyl group.

In addition to the Ziegler-Natta catalyst (ZN-C) and the optional external donor (ED) a co-catalyst (Co) can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Advantageously, the triethyl aluminium (TEAL) has a hydride content, expressed as $AlH_3$, of less than 1.0 wt% with respect to the triethyl aluminium (TEAL). More preferably, the hydride content is less than 0.5 wt%, and most preferably the hydride content is less than 0.1 wt%.

Preferably the ratio between the co-catalyst (Co) and the external donor (ED) [Co/ED] and/or the ratio between the co-catalyst (Co) and the titanium compound (TC) [Co/TC] should be carefully chosen.

Accordingly

(a) the mol-ratio of co-catalyst (Co) to external donor (ED) [Co/ED] is in the range of 5 to 45, preferably is in the range of 5 to 35, more preferably is in the range of 5 to 25, still more preferably is in the range of 8 to 20; and optionally

(b) the mol-ratio of co-catalyst (Co) to titanium compound (TC) [Co/TC] is in the range of above 40 to 500, preferably is in the range of 50 to 300, still more preferably is in the range of 60 to 150.

In the following the present invention is further illustrated by means of examples.

## EXAMPLES

The following definitions of terms and determination methods apply for the above general description of the invention as well as to the below examples unless otherwise defined.

### 1. Measuring Methods

**Calculation** of comonomer content of the second propylene copolymer fraction (R-PP2):

$$\frac{C(PP) - (\frac{w(PP1)}{100})x\, C(PP1)}{(\frac{w(PP2)}{100})} = C(PP2) \quad (I)$$

wherein

w(PP1) is the weight fraction [in wt.-%] of the first propylene copolymer fraction (R-PP1),
w(PP2) is the weight fraction [in wt.-%] of second propylene copolymer fraction (R-PP2),
C(PP1) is the comonomer content [in wt-%] of the first random propylene copolymer fraction (R-PP1),
C(PP) is the comonomer content [in wt-%] of the random propylene copolymer (R-PP),
C(PP2) is the calculated comonomer content [in wt-%] of the second random propylene copolymer fraction (R-PP2).

**$MFR_2$ (230 °C)** is measured according to ISO 1133 (230 °C, 2.16 kg load).

### Quantification of microstructure by NMR spectroscopy

Quantitative nuclear-magnetic resonance (NMR) spectroscopy was used to quantify the comonomer content and comonomer sequence distribution of the polymers. Quantitative $^{13}C\{^{1}H\}$ NMR spectra were recorded in the solution-state using a Bruker Advance III 400 NMR spectrometer operating at 400.15 and 100.62 MHz for $^{1}H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of $1,2$-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^{1}H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed.

Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\chi + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

The relative content of isolated to block ethylene incorporation was calculated from the triad sequence distribution using the following relationship (equation (I)):

$$I(E) = \frac{fPEP}{(fEEE + fPEE + fPEP)} \times 100 \quad \text{(I)}$$

wherein

I(E) is the relative content of isolated to block ethylene sequences [in%];

fPEP is the mol fraction of propylene/ethylene/propylene sequences (PEP) in the sample;

fPEE is the mol fraction of propylene/ethylene/ethylene sequences (PEE) and of ethylene/ethylene/propylene sequences (EEP) in the sample;

fEEE is the mol fraction of ethylene/ethylene/ethylene sequences (EEE) in the sample

**Bulk density, BD**, is measured according ASTM D 1895

**Particle Size Distribution**, PSD

Coulter Counter LS 200 at room temperature with heptane as medium.

**The xylene solubles (XCS, wt.%):** Content of xylene cold solubles (XCS) is determined at 25 °C according ISO 16152; first edition; 2005-07-01
**Hexane solubles (wt.-%):** determined in accordance with FDA section 177.1520
1 g of a polymer cast film of 100 $\mu$m thickness (produced on a PM30 cast film line using chill-roll temperature of 40°C) is extracted 400 ml hexane at 50°C for 2 hours while stirring with a reflux cooler. After 2 hours the mixture is immediately filtered on a filter paper N°41. The precipitate is collected in an aluminium recipient and the residual hexane is evaporated on a steam bath under $N_2$ flow.
The amount of hexane solubles is determined by the formula:

$$( \text{(wt. dried residues + wt. crucible)} - \text{(wt. crucible)} ) / \text{(wt. cast film sample)} \cdot 100$$

**Number average molecular weight ($M_n$), weight average molecular weight ($M_w$) and polydispersity ($Mw/Mn$)**
are determined by Gel Permeation Chromatography (GPC) according to the following method:

The weight average molecular weight Mw and the polydispersity (Mw/Mn), wherein Mn is the number average molecular weight and Mw is the weight average molecular weight) is measured by a method based on ISO 16014-1:2003 and ISO 16014-4:2003.

A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 $\mu$L of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.
**DSC analysis, melting temperature ($T_m$) and crystallization temperature ($T_c$):** measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature and heat of crystallization ($H_c$) are determined from the cooling step, while melting temperature and heat of fusion ($H_f$) are determined from the second heating step.

**The glass transition temperature Tg** is determined by dynamic mechanical analysis according to ISO 6721-7. The measurements are done in torsion mode on compression moulded samples (40x10x1 mm3) between -100 °C and +150 °C with a heating rate of 2 °C/min and a frequency of 1 Hz.

**Flexural modulus** is determined according to ISO 178 on 80x10x4 mm$^3$ test bars injection moulded in line with EN ISO 1873-2.

**Charpy notched impact strength** is determined according to ISO 179 1 eA at 23 °C on 80x10x4 mm$^3$ test bars injection moulded in line with EN ISO 1873-2.

**Tensile modulus** in machine and transverse direction were determined according to ISO 527-3 at 23°C on cast films of 50 $\mu$m thickness produced on a monolayer cast film line with a melt temperature of 220°C and a chill roll temperature of 20°C with a thickness of 50 $\mu$m produced as indicated below. Testing was performed at a cross head speed of 1 mm/min.

**Relative total Penetration Energy:**

The impact strength of films is determined by the "Dynatest" method according to ISO 7725-2 at 0°C on cast films of 50 $\mu$m thickness produced on a monolayer cast film line with a melt temperature of 220°C and a chill roll temperature of 20°C with a thickness of 50 $\mu$m. The value "$W_{break}$" [J/mm] represents the relative total penetration energy per mm thickness that a film can absorb before it breaks divided by the film thickness. The higher this value, the tougher the material is.

Gloss was determined according to DIN 67530-1982 at an angle of 20 ° on cast films with a thickness of 50 $\mu$m produced as indicated below.

**Transparency, haze and clarity** were determined according to ASTM D1003-00 on cast films with a thickness of 50 $\mu$m produced as indicated below.

**Sealing initiation temperature (SIT); sealing end temperature (SET), sealing range:**

The method determines the sealing temperature range (sealing range) of polypropylene films, in particular blown films or cast films. The sealing temperature range is the temperature range, in which the films can be sealed according to conditions given below.

The lower limit (heat sealing initiation temperature (SIT)) is the sealing temperature at which a sealing strength of > 3 N is achieved. The upper limit (sealing end temperature (SET)) is reached, when the films stick to the sealing device.

The sealing range is determined on a J&B Universal Sealing Machine Type 3000 with a film of 100 $\mu$m thickness produced on a monolayer cast film line with a melt temperature of 220°C and a chill roll temperature of 20°C with the following further parameters:

| | |
|---|---|
| Specimen width: | 25.4 mm |
| Seal Pressure: | 0.1 N/mm$^2$ |
| Seal Time: | 0.1 sec |
| Cool time: | 99 sec |
| Peel Speed: | 10 mm/sec |
| Start temperature: | 80 °C |
| End temperature: | 150 °C |
| Increments: | 10 °C |

specimen is sealed A to A at each seal bar temperature and seal strength (force) is determined at each step.

The temperature is determined at which the seal strength reaches 3 N.

**Hot tack force:**

The hot tack force is determined on a J&B Hot Tack Tester with a film of 100 $\mu$m thickness produced on a monolayer cast film line with a melt temperature of 220°C and a chill roll temperature of 20°C with the following further parameters:

| | |
|---|---|
| Specimen width: | 25.4 mm |
| Seal Pressure: | 0.3 N/mm$^2$ |
| Seal Time: | 0.5sec |

(continued)

| | |
|---|---|
| Cool time: | 99 sec |
| Peel Speed: | 200 mm/sec |
| Start temperature: | 90 °C |
| End temperature: | 140 °C |
| Increments: | 10 °C |

The maximum hot tack force, i.e the maximum of a force/temperature diagram is determined and reported.

## 2. Examples

### Catalyst preparation

3.4 litre of 2-ethylhexanol and 810 ml of propylene glycol butyl monoether (in a molar ratio 4/1) were added to a 20 l reactor. Then 7,8 litre of a 20 % solution in toluene of BEM (butyl ethyl magnesium) provided by Crompton GmbH were slowly added to the well stirred alcohol mixture. During the addition the temperature was kept at 10 °C. After addition the temperature of the reaction mixture was raised to 60 °C and mixing was continued at this temperature for 30 minutes. Finally after cooling to room temperature the obtained Mg-alkoxide was transferred to storage vessel.

21,2 g of Mg alkoxide prepared above was mixed with 4,0 ml bis(2-ethylhexyl) citraconate for 5 min. After mixing the obtained Mg complex was used immediately in the preparation of catalyst component.

19,5 ml titanium tetrachloride was placed in a 300 ml reactor equipped with a mechanical stirrer at 25°C. Mixing speed was adjusted to 170 rpm. 26,0 of Mg-complex prepared above was added within 30 minutes keeping the temperature at 25 °C. 3,0 ml of Viscoplex 1-254 and 1,0 ml of a toluene solution with 2 mg Necadd 447 was added. Then 24,0 ml of heptane was added to form an emulsion. Mixing was continued for 30 minutes at 25 °C. Then the reactor temperature was raised to 90°C within 30 minutes. The reaction mixture was stirred for further 30 minutes at 90°C. Afterwards stirring was stopped and the reaction mixture was allowed to settle for 15 minutes at 90°C.

The solid material was washed 5 times: Washings were made at 80 °C under stirring 30 min with 170 rpm. After stirring was stopped the reaction mixture was allowed to settle for 20-30 minutes and followed by siphoning.

*Wash 1:* Washing was made with a mixture of 100 ml of toluene and 1 ml donor.

*Wash 2:* Washing was made with a mixture of 30 ml of TiCl4 and 1 ml of donor.

Wash 3: Washing was made with 100 ml toluene.

*Wash 4:* Washing was made with 60 ml of heptane.

Wash 5. Washing was made with 60 ml of heptane under 10 minutes stirring. Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

### Polymerization

Inventive example IE1 and the comparative example CE2 were produced in a Borstar® pilot plant with a prepolymerization reactor, one slurry loop reactor and one gas phase reactor.

The solid catalyst component used for the inventive example IE1 and comparative example CE2 was used along with triethyl-aluminium (TEAL) as co-catalyst and dicyclo pentyl dimethoxy silane (D-donor) as donor. The aluminium to donor ratio, the aluminium to titanium ratio and the polymerization conditions are indicated in Table 1.

Inventive example IE2 was visbroken from IE1 by using a co-rotating twin-screw extruder at 200-230°C and using an appropriate amount of (tert.-butylperoxy)-2,5-dimethylhexane (Trigonox 101, distributed by Akzo Nobel, Netherlands) to achieve the target $MFR_2$ of 5.4 g/10min. All products were stabilized with 0.2 wt.-% of Irganox B225 (1:1-blend of Irganox 1010 (Pentaerythrityl-tetrakis(3-(3',5'-di-tert.butyl-4-hydroxytoluyl)-propionate and tris (2,4-di-t-butylphenyl) phosphate) phosphite) of BASF AG, Germany) and 0.1 wt.-% calcium stearate.

Comparative example CE1 is the commercial product RE239CF of Borealis AG (Austria) characterized by composition properties as indicated in Table 1.

**Table 1 -** Preparation of the Examples (IE2 is visbroken from IE1; CE 1 is the commercial grade RE239CF)

| | | IE1 | IE2 | CE1 | CE2 |
|---|---|---|---|---|---|
| TEAL/Ti | [mol/mol] | 90 | | | 73 |
| TEAL/Donor | [mol/mol] | 5 | | | 10 |
| **Loop (R-PP1)** | | | | | |
| Time | [h] | 0.5 | | | 0.5 |
| Temperature | [°C] | 70 | | | 70 |
| $MFR_2$ | [g/10min] | 2.2 | | | 2.0 |
| XCS | [wt.-%] | 1.6 | | | 9.2 |
| C2 content | [wt.-%] | 5.4 | | | 3.4 |
| $H_2$/C3 ratio | [mol/kmol] | 1.31 | | | 0.39 |
| C2/C3 ratio | [mol/kmol] | 12.2 | | | 7.3 |
| amount | [wt.-%] | 45 | | | 40 |
| **1 GPR (R-PP2)** | | | | | |
| Time | [h] | 2.0 | | | 3.1 |
| Temperature | [°C] | 80 | | | 85 |
| $MFR_2$ | [g/10min] | 1.1 | | | 2.0 |
| C2 content | [wt.-%] | 8.1 | | | 7.7 |
| $H_2$/C3 ratio | [mol/kmol] | 6.6 | | | 4.6 |
| C2/C3 ratio | [mol/kmol] | 39.0 | | | 37.3 |
| amount | [wt.-%] | 55 | | | 60 |
| **Final** | | | | | |
| $MFR_2$ | [g/10min] | 1.5 | 5.4 | 11.0 | 2.0 |
| C2 content | [wt.-%] | 6.9 | 6.9 | 4.2 | 6.0 |
| XCS | [wt.-%] | 13.9 | 14.0 | 8.0 | 19.8 |
| C6 sol. (FDA) | [wit.-%] | 3.0 | 3.2 | 3.8 | 4.2 |
| Tm | [°C] | 135 | 135 | 139 | 140 |
| Tc | [°C] | 95 | 95 | 97 | 105 |
| 2,1 | [%] | n.d. | n.d. | n.d. | n.d. |
| Tg below -20 °C | [°C] | n.d. | n.d. | n.d. | n.d. |
| Tg above -20 °C | [°C] | -8.2 | -8.2 | -6.0 | -5.6 |
| n.d. not detectable | | | | | |

### Film preparation

Cast films of 50 $\mu$m thickness were produced on a monolayer cast film line with a melt temperature of 220°C and a chill roll temperature of 20°C.

**Table 2** - Characterization of the examples

|  |  | IE1 | IE2 | CE1 | CE2 |
|---|---|---|---|---|---|
| **Mechanics (moulded)** |  |  |  |  |  |
| Flex.modulus | [MPa] | 532 | 524 | 911 | 920 |
| NIS Charpy +23°C | [kJ/m$^2$] | 16.6 | 11.7 | 5.6 | 6.2 |
| **Mechanics (film)** |  |  |  |  |  |
| Tens.modulus (MD) | [MPa] | 310 | 308 | 423 | 484 |
| Tens.modulus (TD) | [MPa] | 275 | 306 | n.m. | 472 |
| W(break) 0°C | [J/mm] | 11.5 | 13.0 | 4.0 | 4.2 |
| **Optics (film)** |  |  |  |  |  |
| Haze | [%] | 1.1 | 0.3 | 2.3 | 1.2 |
| Gloss (inside) | [%] | 152 | 170 | 143 | 150 |
| Gloss (outside) | [%] | 170 | 158 | 142 | 147 |
| **Sealing (film)** |  |  |  |  |  |
| SIT | [°C] | 109 | 107 | 117 | 116 |
| SET | [°C] | 125 | 125 | 140 | 140 |
| Hot tack force | [N] | 1.7 | 2.1 | 2.1 | 2.1 |
| Hot tack temp. | [°C] | 115 | 111 | 110 | 115 |

MD machine direction
TD transverse direction
SIT sealing initiation temperature
SET sealing end temperature
n.m. not measured

**Table 3:** Relative content of isolated to block ethylene sequences (I(E))*

|  |  | IE1 | IE2 | CE1 | CE2 |
|---|---|---|---|---|---|
| I(E)** | [%] | 64.5 | 64.5 | 73.6 | 59.8 |
| fEEE | [mol.-%] | 1.1 | 1.1 | 0.6 | 1.2 |
| fEEP | [mol.-%] | 2.2 | 2.2 | 1.1 | 2.3 |
| fPEP | [mol.-%] | 6.0 | 6.0 | 4.6 | 5.3 |
| fPPP | [mol.-%] | 77.2 | 77.2 | 83.6 | 79.8 |
| fEPP | [mol.-%] | 12.3 | 12.3 | 9.5 | 10.7 |
| fEPE | [mol.-%] | 1.1 | 1.1 | 0.7 | 0.7 |

$$** \ I(E) = \frac{fPEP}{(fEEE + f\mathrm{PEE} + fPEP)} \times 100 \, (I)$$

**Claims**

1. Propylene random copolymer (R-PP) with ethylene, wherein

(a) said propylene copolymer (R-PP) has an ethylene content in the range of 5.3 to 9.0 wt.-%, a melting temperature Tm as determined by DSC according to ISO 11357 in the range of 128 to 138°C, and a xylene cold soluble fraction (XCS) in the range of 9.0 to 18.0 wt.-%;

(b) said propylene copolymer (R-PP) has a melt flow rate MFR2 (230 °C) measured according to ISO 1133 in the range of 0.8 to 25.0 g/10min;

(c) said propylene copolymer (R-PP) comprises two fractions, a first propylene copolymer fraction (R-PP1) and a second propylene copolymer fraction (R-PP2) and said first propylene copolymer fraction (R-PP1) differs from said second propylene copolymer fraction (R-PP2) in the ethylene content;

(d) the first propylene copolymer fraction (R-PP1) has an ethylene content in the range of 4.5 to 7.0 wt.-% based on the first propylene copolymer fraction (R-PP1); and

(e) a relative content of isolated to block ethylene sequences (I(E)) in the range of 45.0 to 69.0 %, wherein the I(E) content is defined by equation (I)

$$I(E) = \frac{fPEP}{(fEEE + fPEE + fPEP)} \times 100 \qquad (I)$$

wherein

I(E) is the relative content of isolated to block ethylene sequences [in %];

fPEP is the mol fraction of propylene/ethylene/propylene sequences (PEP) in the sample;

fPEE is the mol fraction of propylene/ethylene/ethylene sequences (PEE) and of ethylene/ethylene/propylene sequences (EEP) in the sample;

fEEE is the mol fraction of ethylene/ethylene/ethylene sequences (EEE) in the sample

wherein all sequence concentrations being based on a statistical triad analysis of $^{13}$C-NMR data.

2. Propylene copolymer (R-PP) according to claim 1, wherein said propylene copolymer (R-PP) has

(a) a glass transition temperature determined by DMA according to ISO 6721-7 in the range of -15 to -2 °C, and/or
(b) no glass transition temperature below -20 °C.

3. Propylene copolymer (R-PP) according to claim 1 or 2, wherein said propylene copolymer (R-PP) has a crystallization temperature Tc as determined by DSC according to ISO 11357 in the range of 82 to 105 °C.

4. A propylene random copolymer according to any one of the preceding claims, wherein said copolymer (R-PP) comprises two fractions differing in ethylene content,

(a) 20 to 80 wt% of a first propylene copolymer fraction (R-PP1), and
(b) 20 to 80 wt% of a second propylene copolymer fraction (R-PP2) having an ethylene content as determined by 13C-NMR spectroscopy in the range of 7.5 to 10.5 wt.-%.

5. Propylene copolymer (R-PP) according to any one of the preceding claims, wherein the propylene copolymer (R-PP) is free of phtalic acid esters as well as their respective decomposition products.

6. Propylene copolymer (R-PP) according to any one of the preceding claims, wherein said propylene copolymer (R-PP) has 2,1 regio-defects of at most 0.4 % determined by 13C-NMR spectroscopy.

7. An unoriented film or film layer comprising more than 90% of propylene copolymer (R-PP) according to any one of the preceding claims 1 to 6, wherein the film or film layer is a cast film or a blown film, like an air cooled or water cooled blown film.

8. A multi-layer film construction comprising at least one film according to claim 7 as outermost layer.

9. Process for producing a propylene copolymer (R-PP) according to any one of the claims 1 to 6, wherein the propylene copolymer (R-PP) has been produced in the presence of

(a) a Ziegler-Natta catalyst (ZN-C) comprising a titanium compound (TC), a magnesium compound (MC) and an internal donor (ID), wherein said internal donor (ID) is a non-phthalic acid ester,
(b) optionally a co-catalyst (Co), and

(c) optionally an external donor (ED).

wherein the propylene copolymer (R-PP) is produced in a sequential polymerization process comprising at least two reactors (R1) and (R2), in the first reactor (R1) the first propylene copolymer fraction (R-PP1) is produced and subsequently transferred into the second reactor (R2), in the second reactor (R2) the second propylene copolymer fraction (R-PP2) is produced in the presence of the first propylene copolymer fraction (R-PP1).

**10.** Process according to claim 9, wherein

(a) the internal donor (ID) is selected from optionally substituted malonates, maleates, succinates, glutarates, cyclohexene-1,2-dicarboxylates, benzoates and derivatives and/or mixtures thereof, preferably the internal donor (ID) is a citraconate;
(b) the molar-ratio of co-catalyst (Co) to external donor (ED) [Co/ED] is 5 to 45.

**Patentansprüche**

**1.** Statistisches Propylen-Copolymer (R-PP) mit Ethylen, wobei

(a) das Propylen-Copolymer (R-PP) einen Ethylen-Gehalt im Bereich von 5,3 bis 9,0 Gew.-%, eine Schmelz-Temperatur Tm, wie durch DSC gemäß ISO 11357 bestimmt, im Bereich von 128 bis 138°C und eine in kaltem Xylol lösliche Fraktion (XCS) im Bereich von 9,0 bis 18,0 Gew.-% aufweist;
(b) das Propylen-Copolymer (R-PP) eine Schmelze-Fließ-Rate $MFR_2$ (230°C), gemessen gemäß ISO 1133, im Bereich von 0,8 bis 25,0 g / 10 min aufweist;
(c) das Propylen-Copolymer (R-PP) zwei Fraktionen, eine erste Propylen-Copolymer-Fraktion (R-PP1) und eine zweite Propylen-Copolymer-Fraktion (R-PP2), umfasst und die erste Propylen-Copolymer-Fraktion (R-PP1) sich von der zweiten Propylen-Copolymer-Fraktion (R-PP2) in dem Ethylen-Gehalt unterscheidet;
(d) die erste Propylen-Copolymer-Fraktion (R-PP1) aufweist einen Ethylen-Gehalt im Bereich von 4,5 bis 7,0 Gew.-%, basierend auf der ersten Propylen-Copolymer-Fraktion (R-PP1); und
(e) einen relativen Gehalt von isolierten zu Block-Ethylen-Sequenzen (I(E)) im Bereich von 45,0 bis 69,0 %, wobei der I(E)-Gehalt durch Gleichung (I) definiert ist

$$I(E) = \frac{fPEP}{(fEEE + fPEE + fPEP)} \times 100 \quad \text{(I)}$$

wobei

I (E) der relative Gehalt von isolierten zu Block-Ethylen-Sequenzen [in %] ist;
fPEP der Molenbruch von Propylen / Ethylen / Propylen-Sequenzen (PEP) in der Probe ist;
fPEE der Molenbruch von Propylen / Ethylen / Ethylen-Sequenzen (PEE) und von Ethylen / Ethylen / Propylen-Sequenzen (EEP) in der Probe ist;
fEEE der Molenbruch von Ethylen / Ethylen / Ethylen-Sequenzen (EEE) in der Probe ist,
wobei alle Sequenz-Konzentrationen auf einer statistischen Triaden-Analyse von $^{13}$C-NMR-Daten basieren.

**2.** Propylen-Copolymer (R-PP) nach Anspruch 1, wobei das Propylen-Copolymer (R-PP) aufweist

(a) eine Glas-Übergangs-Temperatur, bestimmt durch DMA gemäß ISO 6721-7, im Bereich von -15 bis -2°C, und/oder
(b) keine Glas-Übergangs-Temperatur unter -20°C.

**3.** Propylen-Copolymer (R-PP) nach Anspruch 1 oder 2, wobei das Propylen-Copolymer (R-PP) eine Kristallisations-Temperatur Tc, wie durch DSC gemäß ISO 11357 bestimmt, im Bereich von 82 bis 105°C aufweist.

**4.** Statistisches Propylen-Copolymer nach einem der vorangehenden Ansprüche, wobei das Copolymer (R-PP) zwei Fraktionen umfasst, die sich im Ethylen-Gehalt unterscheiden,

(a) 20 bis 80 Gew.-% von einer ersten Propylen-Copolymer-Fraktion (R-PP1), und

(b) 20 bis 80 Gew.-% von einer zweiten Propylen-Copolymer-Fraktion (R-PP2) mit einem Ethylen-Gehalt, wie durch $^{13}$C-NMR-Spektroskopie bestimmt, im Bereich von 7,5 bis 10,5 Gew.-%.

5. Propylen-Copolymer (R-PP) nach einem der vorangehenden Ansprüche, wobei das Propylen-Copolymer (R-PP) frei von Phthalsäureestern sowie deren jeweiligen ZersetzungsProdukten ist.

6. Propylen-Copolymer (R-PP) nach einem der vorangehenden Ansprüche, wobei das Propylen-Copolymer (R-PP) 2,1-Regio-Defekte von höchstens 0,4 %, bestimmt durch $^{13}$C-NMR-Spektroskopie, aufweist.

7. Unorientierte Folie oder Folien-Lage, umfassend mehr als 90 % Propylen-Copolymer (R-PP) nach einem der vorangehenden Ansprüche 1 bis 6, wobei die Folie oder Folien-Lage eine Gieß-Folie oder eine Blas-Folie, wie eine Luft gekühlte oder Wasser gekühlte Blas-Folie, ist.

8. Mehr-Lagen-Folien-Aufbau, umfassend mindestens eine Folie nach Anspruch 7 als äußerste Lage.

9. Verfahren zur Herstellung eines Propylen-Copolymers (R-PP) nach einem der Ansprüche 1 bis 6, wobei das Propylen-Copolymer (R-PP) hergestellt wurde in Gegenwart von

(a) einem Ziegler-Natta-Katalysator (2N-C), umfassend eine Titan-Verbindung (TC), eine MagnesiumVerbindung (MC) und einen inneren Donor (ID), wobei der innere Donor (ID) ein Nicht-Phthalsäureester ist,
(b) gegebenenfalls einem Co-Katalysator (Co), und
(c) gegebenenfalls einem äußeren Donor (ED),

wobei das Propylen-Copolymer (R-PP) in einem sequenziellen Polymerisations-Verfahren hergestellt wird, umfassend mindestens zwei Reaktoren (R1) und (R2), wobei in dem ersten Reaktor (R1) die erste Propylen-Copolymer-Fraktion (R-PP1) hergestellt wird und anschließend in den zweiten Reaktor (R2) überführt wird, wobei in dem zweiten Reaktor (R2) die zweite Propylen-Copolymer-Fraktion (R-PP2) in Gegenwart der ersten Propylen-Copolymer-Fraktion (R-PP1) hergestellt wird.

10. Verfahren nach Anspruch 9, wobei

(a) der innere Donor (ID) ausgewählt ist aus gegebenenfalls substituierten Malonaten, Maleaten, Succinaten, Glutaraten, Cyclohexen-1,2-dicarboxylaten, Benzoaten und Derivaten und/oder Gemischen davon, vorzugsweise ist der innere Donor (ID) ein Citraconat;
(b) das Mol-Verhältnis von Co-Katalysator (Co) zu äußerem Donor (ED) [Co / ED] 5 bis 45 ist.

**Revendications**

1. Copolymère statistique de propylène (R-PP) avec de l'éthylène, dans lequel

(a) ledit copolymère de propylène (R-PP) possède une teneur en éthylène située dans la plage allant de 5,3 à 9,0 % en poids, présente un point de fusion Tm, tel que déterminé par DSC conformément à la norme ISO 11357, situé dans la plage allant de 128 à 138°C, et possède une fraction soluble dans le xylène froid (XCS) située dans la plage allant de 9,0 à 18,0 % en poids ;
(b) ledit copolymère de propylène (R-PP) présente un indice de fluage MFR2 (230°C), mesuré conformément à la norme ISO 1133, situé dans la plage allant de 0,8 à 25,0 g/10 min ;
(c) ledit copolymère de propylène (R-PP) comprend deux fractions, une première fraction de copolymère de propylène (R-PP1) et une deuxième fraction de copolymère de propylène (R-PP2), et ladite première fraction de copolymère de propylène (R-PP1) diffère de ladite deuxième fraction de copolymère de propylène (R-PP2) par la teneur en éthylène ;
(d) la première fraction de copolymère de propylène (R-PP1) possède une teneur en éthylène située dans la plage allant de 4,5 à 7,0 % en poids par rapport à la première fraction de copolymère de propylène (R-PP1) ; et
(e) la teneur relative en séquences d'éthylène isolées en blocs (I(E)) est située dans la plage allant de 45,0 à 69,0 %, où la teneur en I(E) est définie par l'équation (I) :

$$I(E) = \frac{fPEP}{(fEEE + fPEE + fPEP)} \times 100 \qquad (I)$$

dans laquelle

I(E) est la teneur relative en séquences d'éthylène isolées en blocs [en %] ;
fPEP est la fraction molaire des séquences de propylène/éthylène/propylène (PEP) dans l'échantillon ;
fPEE est la fraction molaire des séquences de propylène/éthylène/éthylène (PEE) et des séquences d'éthylène/éthylène/propylène (EEP) dans l'échantillon ;
fEEE est la fraction molaire des séquences d'éthylène/éthylène/éthylène (EEE) dans l'échantillon ;
où toutes les concentrations de séquences sont basées sur une analyse statistique de triades des données de RMN-$^{13}$C.

2. Copolymère de propylène (R-PP) selon la revendication 1, lequel copolymère de propylène (R-PP) (a) présente une température de transition vitreuse, déterminée par DMA conformément à la norme ISO 6721-7, située dans la plage allant de -15 à -2°C, et/ou (b) ne présente pas de température de transition vitreuse inférieure à -20°C.

3. Copolymère de propylène (R-PP) selon la revendication 1 ou 2, lequel copolymère de propylène (R-PP) présente une température de cristallisation Tc, telle que déterminée par DSC conformément à la norme ISO 11357, située dans la plage allant de 82 à 105°C.

4. Copolymère statistique de propylène selon l'une quelconque des revendications précédentes, lequel copolymère (R-PP) comprend deux fractions différant par la teneur en éthylène,

   (a) 20 à 80 % en poids d'une première fraction de copolymère de propylène (R-PP1), et
   (b) 20 à 80 % en poids d'une deuxième fraction de copolymère de propylène (R-PP2) possédant une teneur en éthylène, telle que déterminée par spectroscopie RMN-$^{13}$C, située dans la plage allant de 7,5 à 10,5 % en poids.

5. Copolymère de propylène (R-PP) selon l'une quelconque des revendications précédentes, lequel copolymère de propylène (R-PP) est exempt d'esters d'acide phtalique ainsi que de leurs produits de décomposition respectifs.

6. Copolymère de propylène (R-PP) selon l'une quelconque des revendications précédentes, lequel copolymère de propylène (R-PP) possède au plus 0,4 % de régio-défauts 2,1, tels que déterminés par spectroscopie RMN-$^{13}$C.

7. Film non orienté ou couche de film comprenant plus de 90 % de copolymère de propylène (R-PP) selon l'une quelconque des revendications 1 à 6, lequel film ou couche de film est un film coulé ou un film soufflé, tel qu'un film soufflé refroidi par air ou refroidi par eau.

8. Construction de film multicouche comprenant au moins un film selon la revendication 7 en tant que couche la plus extérieure.

9. Procédé pour produire un copolymère de propylène (R-PP) selon l'une quelconque des revendications 1 à 6, dans lequel le copolymère de propylène (R-PP) a été produit en présente de

   (a) un catalyseur de Ziegler-Natta (ZN-C) comprenant un composé du titane (TC), un composé du magnésium (MC) et un donneur interne (ID), ledit donneur interne (ID) n'étant pas un ester d'acide phtalique,
   (b) éventuellement un cocatalyseur (Co), et
   (c) éventuellement un donneur externe (ED),

   dans lequel le copolymère de propylène (R-PP) est produit dans un procédé de polymérisation séquentielle comprenant au moins deux réacteurs (R1) et (R2), dans le premier réacteur (R1) la première fraction de copolymère de propylène (R-PP1) est produite et ensuite transférée dans le deuxième réacteur (R2), dans le deuxième réacteur (R2) la deuxième fraction de copolymère de propylène (R-PP2) est produite en présence de la première fraction de copolymère de propylène (R-PP1).

**10.** Procédé selon la revendication 9, dans lequel

(a) le donneur interne (ID) est choisi parmi les malonates, maléates, succinates, glutarates, cyclohexène-1,2-dicarboxylates, benzoates et leurs dérivés et/ou mélanges, éventuellement substitués, de préférence le donneur interne (ID) est un citraconate ;
(b) le rapport molaire du cocatalyseur (Co) sur le donneur externe (ED) [Co/ED] est de 5 à 45.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2487203 A1
- EP 663422 A1
- EP 2610274 A
- EP 887379 A
- EP 887380 A
- EP 887381 A
- EP 991684 A
- EP 0887379 A

- WO 9212182 A
- WO 2004000899 A
- WO 2004111095 A
- WO 9924478 A
- WO 9924479 A
- WO 0068315 A
- WO 2012007430 A

**Non-patent literature cited in the description**

- *Chemical Reviews,* 2000, vol. 100 (4), 1316-1327
- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128

- **CHENG, H. N.** *Macromolecules,* 1984, vol. 17, 1950
- **L. RESCONI ; L. CAVALLO ; A. FAIT ; F. PIEMONTESI.** *Chem. Rev.,* 2000, vol. 100 (4), 1253
- **W-J. WANG ; S. ZHU.** *Macromolecules,* 2000, vol. 33, 1157
- **WANG, W-J. ; ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150